# EUROPÄISCHE PATENTSCHRIFT

(11) **EP 4 364 241 B1**
(45) Veröffentlichungstag und Bekanntmachung des Hinweises auf die Patenterteilung: **18.11.2026**
(21) Anmeldenummer: 22736203.5
(22) Anmeldetag: 14.06.2022
(51) Int. Cl.: H01Q 3/26, F41J 9/08, F41J 2/00, G01S 7/02, G01S 13/74, G01S 7/38, G01S 3/02, F41H 11/02, F41F 3/00, B64C 39/02, F41G 7/22, B64U 80/84, H01Q 1/28

(54) **VERFAHREN ZUM SCHUTZ EINES OBJEKTS VOR EINEM RADARGELENKTEN FLUGKÖRPER**
METHOD FOR PROTECTING AN OBJECT FROM A RADAR-GUIDED MISSILE
PROCÉDÉ DE PROTECTION D'UN OBJET CONTRE UN MISSILE GUIDÉ PAR RADAR

(30) Priorität: 02.07.2021 DE 102021117084
(43) Veröffentlichungstag der Anmeldung: 08.05.2024
(73) Patentinhaber: Rheinmetall Waffe Munition GmbH, 29345 Südheide (DE)
(72) Erfinder: FEGG, Martin, 83471 Berchtesgaden (DE); WEGSCHEIDER, Martin, 83457 Bayerisch Gmain (DE); WEINBEER, Jan, 83435 Bad Reichenhall (DE)
(74) Vertreter: DREISS Patentanwälte PartG mbB
(86) Internationale Anmeldenummer: PCT/EP2022/066213
(87) Internationale Veröffentlichungsnummer: WO 2023/274721

(56) Entgegenhaltungen:
- EP-B1- 1 668 310
- EP-B1- 2 761 245
- WO-A1-2021/048516
- DE-A1- 102015 002 737
- DE-A1- 102019 117 801
- RU-C1- 2 660 518
- RU-C1- 2 685 282

## Beschreibung

Die Erfindung betrifft ein Verfahren zum Schutz eines Objekts, insbesondere eines Land- oder Wasserfahrzeugs, insbesondere eines Schiffs, vor einem radargelenkten Flugkörper, unter Einsatz und Verwendung eines Aktiven Offboard Reflektors, der bei einem Scheinziel angeordnet ist und wenigstens eine Empfangsantenne und wenigstens eine Sendeantenne umfasst,
wobei ein von dem radargelenkten Flugkörper ausgesandtes Radarsignal erfasst wird und als verstärktes Signal in die zuvor ermittelte umgekehrte Empfangsrichtung zu dem Flugkörper zurückgesandt wird.

Die Erfindung betrifft auch ein Schutzsystem zur Durchführung des Verfahrens, umfassend ein Scheinziel und wenigstens einen Aktiven Offboard Reflektor, der bei dem Scheinziel angeordnet ist und wenigstens eine Empfangsantenne und wenigstens eine Sendeantenne sowie eine Einrichtung zum Verstärken eines von dem radargelenkten Flugkörper ausgesandten und durch die Empfangsantenne empfangenen Radarsignals und eine Einrichtung und zum Ansteuern der Sendeantenne zum Aussenden des verstärkten Radarsignals in umgekehrter Empfangsrichtung zurück zu dem anfliegenden Flugkörper aufweist, eine Einrichtung zur Ermittlung der Empfangsrichtung des empfangenen von dem Flugkörper zuvor ausgesandten Radarsignals.

Ein derartiges Verfahren und eine Vorrichtung ist vorbekannt und beschrieben in DE 10 2011 114 574 A1. Mit dieser Druckschrift wurde bereits vorgeschlagen, ein Radarsignal eines anfliegenden radargelenkten Flugkörpers in verstärkter Form, also aktiv, zu dem Flugkörper zurückzusenden, und zwar ausgehend von einem Scheinziel, welches den hierfür erforderlichen Aktiven Offboard-Reflektor mit sich führt. Bei dem zu schützenden Objekt handelt es sich typischerweise um ein Schiff, welches vor Beginn eines Angriffs ein mit dem Aktiven Offboard-Reflektor ausgestattetes Scheinziel mit sich führt. Es ist aber zumindest grundsätzlich denkbar, dass das Scheinziel, welches dem zu schützenden Objekt zugeordnet ist, bereits in einiger Entfernung zu dem zu schützenden Objekt, insbesondere auf einem Begleitfahrzeug, mitgeführt wird.

Ferner sind aus der US 2020-0371206 A1, der US 2019-0137603 A1 und der US 2019-0204414 A1 Verfahren und Vorrichtungen bekannt, um einem Radarsystem ein virtuelles Objekt, wie insbesondere ein Flugzeug oder eine Rakete, mittels eines aktiven Reflektors zu simulieren, wobei das simulierte virtuelle Objekt nicht am Ort des aktiven Reflektors lokalisiert ist. Dabei dient das Vortäuschen eines virtuellen Objekts dazu, ein Radarsystem zu kalibrieren oder die Effektivität eines Radarsystems zu testen. Der aktive Reflektor ist bei einem Fluggerät angeordnet und erzeugt ein zu dem Fluggerät beabstandetes virtuelles Objekt durch Modulation und Zurücksenden eines von dem Radarsystem ausgehenden Signals.

Ein passives Schutzsystem ist aus der DE 10 2019 117 801 A1 vorbekannt. Ein Fluggerät trägt eine räumliche Anordnung von mehreren passiven Corner-Reflektoren, die ein Scheinziel zur Täuschung von radargesteuerten Flugkörpern bilden, indem die passiven Reflektoren ein von dem radargesteuerten Flugkörper ausgehendes Radarsignal zurückreflektieren. Durch die Anordnung von mehreren passiven Corner-Reflektoren kann offenbar besser erreicht werden, dass das Radarsignal zu dem angreifenden Flugkörper wirksam zurückreflektiert wird.

RU 2685282 C1 beschreibt ein Verfahren und ein System zum Schutz eines maritimen Ziels durch Erzeugung eines hiervon beabstandeten Scheinziels. Hierfür wird mit vorgeschlagen, eine Mehrzahl von fliegenden Drohnen in die Luft zu bringen, welche jeweils mehrere vertikal übereinander hängende Täuschkörper tragen, die dann je nach Gattung/Art in vertikalen Ebenen angeordnet sind. Bei den Täuschkörpern handelt es sich um visuell wahrnehmbare Täuschkörper bzw. um Infrarotstrahler bzw. um Corner-Reflektoren, also passive Radarreflektoren. Dadurch, dass jeweils Täuschkörper derselben Art übereinander und unterhalb einer Drohne aufgehängt sind und somit eine hängende säulenartige Anordnung bilden, lassen sich vertikale Ebenen dieser Täuschkörper bilden. Die Drohnen sind entsprechend einem Flugprogramm steuerbar und lassen sich in verschiedener Weise im Raum anordnen mit dem Ziel, dass ein heranfliegender Flugkörper sich auf das hierdurch gebildete Scheinziel aufschaltet.

DE 10 2015 002 737 A1 verwendet eine Täuschkörperwurfeinrichtung, um ein Scheinziel bestehend aus Chaff-Material (Düppel) und Flares in zunächst definierten Bahnen auszubringen.

WO 2021/048516 A1 offenbart die Verwendung einer Wurfeinrichtung, um eine Drohne in die Luft zu bringen, die einen daran hängenden passiven Corner-Reflektor trägt. Die Drohne wird dann durch Schiff-Drohne-Kommunikation gesteuert.

US 2008-0018525 A1 lehrt ein Verfahren und eine hochkomplexe Vorrichtung, die bspw. auf einem einzelnen Kampfflugzeug angeordnet ist, um ein eingehendes Radarsignal aktiv derart zu verändern und zurückzureflektieren, dass das Kampfflugzeug auf dem Radar wie ein anderes Objekt wirkt, bspw. wie ein wesentlich größeres Passagier- oder Bomber Flugzeug. Somit können ausgehend von einem einzigen Flugobjekt einem Radarsystem verschiedene Flugzeuge mit einem hohen Realitätsgrad simuliert werden, um eine realistische Bewertung von Waffensystemen im Einsatz zu ermöglichen.

Es sind zwei Situationen bei der Einleitung des eingangs genannten Schutzverfahrens denkbar. In der ersten Situation, die als "Distraktion" bezeichnet wird, hat sich der Flugkörper noch nicht auf das zu schützende Objekt aufgeschaltet, sondern befindet sich gewissermaßen selbst noch im Suchmodus, in dem er Radarsignale aussendet und Radarreflexe erwartet. Wird bei einem zu schützenden Objekt ein solches Radarsignal empfangen, so kann hieraus Richtung, Entfernung, Geschwindigkeit des Flugkörpers ermittelt werden, und es kann unmittelbar das Scheinziel zusammen mit dem Aktiven Offboard-Reflektor ausgebracht und ein verstärktes reflektiertes Radarsignal in der umgekehrten Empfangsrichtung ausgesandt werden, so dass der anfliegende radargelenkte Flugkörper hierdurch auf das Scheinziel aufmerksam wird und sich auf dieses aufschaltet. In der anderen Situation der sogenannten "Seduktion" wird von einem bereits bestehenden Radarkontakt zwischen dem zu schützenden Objekt bzw. dem noch bei dem Objekt befindlichen Scheinziel und dem anfliegenden Flugkörper ausgegangen, und hiervon ausgehend wird das Scheinziel von dem zu schützenden Objekt wegbewegt, während mittels seines Aktiven Offboard Reflektors das empfangene Radarsignal des Flugkörpers in verstärkter Form zu dem Flugkörper zurückreflektiert wird.

Mit zunehmender Entwicklung von Schutzverfahren, insbesondere der vorausgehend geschilderten Art, geht auch eine Weiterentwicklung der Erkennungsmaßnahmen oder Unterscheidungsmaßnahmen bei den angreifenden radargelenkten Flugkörpern einher. So vermögen mit intelligenten Einrichtungen zur Erkennung und Beurteilung von reflektierten Radarsignalen ausgestattete radargelenkte Flugkörper mit zunehmender Qualität zwischen Scheinzielen und Echtzielen zu unterscheiden. Derartige Einrichtungen vermögen etwa anhand der räumlichen und zeitlichen Form des Radarechos eine Beurteilung zwischen einem Echtziel und einer durch ein Scheinziel herbeigeführten Radarreflexion zu geben. Daher besteht aus Sicht des zu schützenden Objekts die Gefahr, dass das Täuschungsmanöver als solches erkannt wird und Umgehungsmaßnahmen wirksam eingeleitet werden.

Der vorliegenden Erfindung liegt die Aufgabe zugrunde, dem wirksam zu begegnen.

Diese Aufgabe wird erfindungsgemäß gelöst durch ein Verfahren nach Anspruch 1.

Es wird also erfindungsgemäß vorgeschlagen, das zu schützende Objekt durch eine Mehrzahl von Drohnen und damit durch eine Mehrzahl von Aktiven Offboard Reflektoren als Einzelstreuzentren nachzubilden oder zu simulieren.

Hierdurch kann auch ein dreidimensional ausladendes Objekt, wie bspw. ein Schiff realitätsnah durch das Scheinziel nachgebildet werden. Durch die Mehrzahl von entsprechend dem zu schützenden Objekt im Luftraum anzuordnenden Einzelstreuzentren in Form der durch die Drohnen mitgeführten Aktiven Offboard Reflektoren kann gewissermaßen die Radarsignatur des zu schützenden Objekts, insbesondere eines Schiffs, beliebig realitätsnah abgebildet und damit simuliert werden. Durch die Anzahl und Anordnung der Drohnen und deren mitgeführten Aktiven Offboard Reflektoren relativ zueinander, insbesondere im Hinblick auf die Dichte der Anordnung, also Anzahl der Drohnen pro Ansichtsfläche oder pro Raumvolumen, lassen sich die wirklichen Streuzentren des zu schützenden Objekts realitätsnah simulieren. Insbesondere ist es denkbar, dass in weiter von der Wasseroberfläche beabstandeten Bereichen, etwa zur Simulation eines Brückenhauses oder sonstiger Aufbauten eines typischen Schiffs, eine höhere Drohnendichte als Scheinziel gebildet wird, um die Unterscheidung des Scheinziels von dem zu schützenden Objekt auch für intelligent ausgebildete Flugkörper zu erschweren.

Erfindungsgemäß wird also durch eine Mehrzahl oder gar Vielzahl einzelner Aktiver Offboard Reflektoren, als Einzelstreuzentren, die in einem Drohnenschwarm mitgeführt werden, die echte Radarsignatur des zu schützenden Objekts, insbesondere eines Schiffs oder Marineschiffs, simuliert. Hierbei werden die fliegenden Drohnen derart gesteuert, dass jede Drohne eine vorgegebene Position innerhalb des Schwarms einnimmt, entsprechend einem vorgegebenen oder zuvor berechneten Muster, derart, dass hierdurch die echten Streuzentren des Objekts aus der Sicht des anfliegenden Flugkörpers realitätsnah dargestellt werden.

Dieses Grundprinzip des hier vorgeschlagenen Schutzverfahrens kann auch unabhängig von einer etwaigen Polarisationsrichtung des von dem anfliegenden Flugkörper ausgesandten Radarsignals realisiert werden. Hierfür ist es zweckmäßig, dass die jeweiligen Empfangsantennen und auch Sendeantennen derart ausgerichtet werden, dass jede Polarisationsrichtung empfangen, verstärkt und wieder in umgekehrter Empfangsrichtung zu dem Flugkörper zurückgesandt werden kann.

Wie bereits erwähnt, wird das Schutzverfahren eingeleitet durch Erkennung eines anfliegenden radargelenkten Flugkörpers. Es erweist sich als vorteilhaft, dass mittels der Empfangsantennen und/oder mittels eines zusätzlichen Sensors die Empfangsrichtung des Radarsignals und damit eine Anflugrichtung des radargelenkten Flugkörpers ermittelt wird. Die Kenntnis der genauen Empfangsrichtung erweist sich als wesentlich, um das empfangene Radarsignal in verstärkter Form genau in der umgekehrten Empfangsrichtung wieder zu dem Flugkörper zurückzusenden, also eine aktive Radarantwort auszusenden. Die Kenntnis der hieraus in der Regel ebenfalls ableitbaren Anflugrichtung des radargelenkten Flugkörpers, die aber auch in anderer Weise ermittelt werden kann, erweist sich aber auch als vorteilhaft, um in Abhängigkeit von dieser Anflugrichtung und insbesondere in Abhängigkeit von der Ausrichtung des zu schützenden Objekts und insbesondere seines Bewegungszustands, insbesondere seiner Bewegungsrichtung, ein geeignetes vorgegebenes Täuschungsmuster auszuwählen oder in Abhängigkeit von insbesondere weiteren Parametern zu errechnen. Dieses Täuschungsmuster entspricht dann einer Anordnung der Drohnen und deren mitgeführten Aktiven Offboard Reflektoren im Raum, und zwar sowohl hinsichtlich des Orts dieses Drohnenschwarms relativ zu dem zu schützenden Objekt als auch hinsichtlich der Anordnung der Drohnen im Schwarm, also der jeweiligen Abstände benachbarter Drohnen voneinander.

Hierbei ist es grundsätzlich denkbar, dass die Ermittlung der Empfangsrichtung des feindlichen Radarsignals und die Ermittlung der Anflugrichtung zu Beginn bereits unter Verwendung der Aktiven Offboard Reflektoren bei einer oder mehreren Drohnen ausgeführt wird, oder diese Ermittlung kann vor oder zu Beginn des Schutzverfahrens durch geeignete Empfangseinrichtungen, Sensoreinrichtungen und Recheneinrichtungen bei dem zu schützenden Objekt ausgeführt werden.

Hinsichtlich der Ausbildung und Ausstattung der Drohnen erweist es sich als vorteilhaft, dass eine Empfangsrichtung eines Radarsignals und/oder eine Anflugrichtung des radargelenkten Flugkörpers, ermittelt wird, indem bei einer Drohne eine Mehrzahl von Empfangsantennen vorgesehen und verwendet werden, insbesondere in Form einer arrayartigen Anordnung von Empfangsantennen, insbesondere in Form eines van-Atta-Arrays von Empfangsantennen, insbesondere mittels Phasenvergleich einer bei mehreren Empfangsantennen empfangenen Radarwelle. Es wird als vorteilhaft angesehen, wenn jede Drohne des Drohnenschwarms in dieser Weise ausgebildet ist. Es wäre aber zumindest auch denkbar, dass eine Empfangsrichtung des feindlichen Radarsignals und/oder eine Anflugrichtung des Flugkörpers nur bei einigen Drohnen als Masterdrohnen ermittelt wird und mittels Drohne-zu-Drohne-Kommunikation an die anderen Drohnen des Schwarms übermittelt wird. In jedem Fall erweist es sich als vorteilhaft, wenn jede Drohne mittels einer elektrischen Flugantriebsteuerung ausgestattet ist, so dass sich die Drohnen selbst derart optimal positionieren können, dass deren Empfangsantennen und Sendeantennen optimal zur Erfassung und Wiederaussendung der Radarsignale von bzw. zu dem anfliegenden radargelenkten Flugkörper ausgerichtet sind, insbesondere um auch polarisierte Radarsignale zu erfassen.

Es wäre grundsätzlich denkbar, dass ein zu schützendes Objekt stets von einem bereits in der Luft befindlichen Drohnenschwarm als Scheinziel begleitet wird. Beispielsweise könnten mehrere Drohnenschwärme bei dem zu schützenden Objekt vorgehalten und abwechselnd in die Luft gebracht und zur Energieversorgung wieder eingeholt werden. Typischerweise dürften die Drohnen aber vor ihrem Einsatz auf dem zu schützenden Objekt oder bei einem Begleitfahrzeug angeordnet oder mitgeführt werden und solchenfalls vorzugsweise erst für die Ausführung des Täuschungsmanövers ausgehend von dem zu schützenden Objekt oder ausgehend von dem die Drohnen mitführenden Begleitfahrzeug in die Luft gelangen.

Da die Zeitspannen zwischen dem Erkennen eines anfliegenden radargelenkten Flugkörpers und dessen Zielerreichung mitunter extremst kurz bemessen sind und im Einzelfall im Bereich von 10 bis 20 Sekunden liegen können, erweist es sich als vorteilhaft, dass die Drohnen für ihren Flugeinsatz ausgehend von dem zu schützenden Objekt oder ausgehend von einem die Drohnen mitführenden Begleitfahrzeug mittels einer Wurfeinrichtung in die Luft gebracht werden.

Hierbei erweist es sich als vorteilhaft, dass die Drohnen mittels einer elektronisch gesteuerten Wurfeinrichtung für ihren Flugeinsatz in die Luft gebracht werden, derart, dass die Richtung, Geschwindigkeit und/oder Entfernung der Verbringung relativ zu dem zu schützenden Objekt unter Berücksichtigung und in Abhängigkeit einer zuvor ermittelten Anflugrichtung und vorzugsweise weiterer Parameter des anfliegenden radargelenkten Flugkörpers ermittelt werden.

Bei der Wurfeinrichtung kann es sich um eine mit Explosionsantrieb arbeitende Wurfeinrichtung, insbesondere eine Mörsereinrichtung, handeln, mittels derer die Drohnen mit vorbestimmter Geschwindigkeit und Richtung in die Luft geschossen werden. Druckluft- und/oder Raketenantriebe sind ebenfalls denkbar.

Weiter erweist es sich als vorteilhaft, dass die Drohnen entsprechend eines zuvor berechneten Täuschungsmusters mittels der elektronisch gesteuerten Wurfeinrichtung in die Luft gebracht werden. Unter Verwendung einer hierauf eingerichteten elektronisch gesteuerten Wurfeinrichtung lassen sich die jeweiligen Drohnen bereits mittels der Wurfeinrichtung an ihre ungefähre Schwarmposition im Raum und relativ zu dem zu schützenden Objekt bringen.

Zur Optimierung und Stabilisierung des zuvor ausgewählten oder berechneten Täuschungsmusters, nach der sich die Drohnen in der Luft anordnen sollen, erweist es sich als vorteilhaft, dass bei einer jeweiligen Drohne deren momentane Ist-Position relativ zu ihrer Ausgangsposition bei dem zu schützenden Objekt oder bei dem Begleitfahrzeug ermittelt wird und mit einer, insbesondere zuvor errechneten, Soll-Position verglichen wird und dass mittels einer elektronischen Flugantriebssteuereinrichtung eine jeweilige Flugantriebseinrichtung der Drohne derart angesteuert wird, dass die Drohne die, insbesondere zuvor errechnete, Soll-Position einnimmt.

Jede Drohne hat also ihren Platz im Drohnenschwarm relativ zu den anderen Drohnen, den sie einnehmen muss entsprechend einem vorgegebenen oder nach Kontakt zu dem Flugkörper ermittelten Täuschungsmuster.

Mittels der elektronischen Flugantriebsteuereinrichtung, die mit einer Soll-Position der betreffenden Drohne versehen ist, lässt sich eine jeweilige Drohne an ihren Platz im Drohnenschwarm bringen.

Insbesondere wenn eine Empfangsantenne oder eine Empfangs- oder Sendeantennenanordnung nicht omnidirektional ausgebildet ist, sondern eine Vorzugsrichtung aufweist, erfolgt vorzugsweise auch eine Ansteuerung des Flugantriebs der Drohne derart, dass eine optimale Ausrichtung auf das Radarsignal des radargelenkten Flugkörpers gegeben ist.

Für die Positionsermittlung kann es sich als vorteilhaft erweisen, dass bei einer jeweiligen Drohne deren momentane Ist-Position absolut und/oder relativ zu ihrer Ausgangs-Position mittels GPS oder vorzugsweise mittels Beschleunigungssensorik ermittelt wird. Die Beschleunigungssensorik kann einen oder mehrere Beschleunigungssensoren und/oder Drehratensensoren aufweisen. Somit kann die Beschleunigungssensorik bspw. eine Intertialmesseinrichtung ausbilden.

Weiter erweist es sich als vorteilhaft, dass eine Abstandssteuerung zwischen den Drohnen ausgeführt wird, und die Drohnen hierzu kommunizieren, also birektional Informationen austauschen.

Es erweist sich weiter als vorteilhaft, wenn die Mehrzahl von Drohnen, also der Drohnenschwarm, selbst entsprechend zuvor vorgegebenen oder berechneten Schwarmgeschwindigkeiten bewegt wird. Die jeweilige absolute Soll-Position der Drohnen oder des Drohnenschwarms ist also zudem zeitabhängig. Hierbei erweist es sich als vorteilhaft, wenn die Drohnen bzw. der Drohnenschwarm von dem zu schützenden Objekt wegbewegt werden. Diese Wegbewegung sollte jedoch stetig, also unter Vermeidung abrupter Richtungsänderungen, die wiederum von einem intelligenten Auswertesystem als Scheinzielbewegungen detektiert werden könnten, erfolgen.

Gegenstand der Erfindung ist auch ein Schutzsystem mit den Merkmalen des Anspruchs 6. Erfindungsgemäß wird vorgeschlagen, dass das eingangs genannte Schutzsystem eine Mehrzahl von Drohnen umfasst, welche zusammen das Scheinziel bilden, wobei zumindest einige und vorzugsweise alle Drohnen jeweils wenigstens einen Aktiven Offboard Reflektor aufweisen,
dass die Drohnen Flugantriebseinrichtungen und mit diesen zusammenwirkende elektronische programmierbare Steuereinrichtungen aufweisen, die eingerichtet sind, um die Drohnen im dreidimensionalen Raum und relativ zueinander nach einem dem zu schützenden Objekt entsprechenden, vorgegebenen oder zuvor berechneten Täuschungsmuster anzuordnen, damit die Drohnen und deren Aktive Offboard Reflektoren als Einzelstreuzentren wirken und in ihrer Gesamtheit ein das zu schützende Objekt simulierendes Radarstreumuster erzeugen. Im Sinne der vorliegenden Erfindung ist es intendiert, dass vorzugsweise alle Drohnen in dieser Weise ausgebildet sind. Es wäre aber auch denkbar, dass in dem Schwarm zusätzlich Drohnen mit lediglich passiv reflektierenden Reflektoren zusätzlich mitgeführt werden. Auch dies kann sich auf die Simulation eines das zu schützende Objekt simulierenden Radarstreumusters oder der Radarsignatur positiv auswirken.

Um die Mehrzahl von Drohnen zur Bildung eines Drohnenschwarms, welcher mit seinen reflektierten Radarsignalen das Scheinziel simuliert, rasch in die Luft zu bekommen, erweist es sich als vorteilhaft, dass das Schutzsystem eine elektronisch gesteuerte, in Azimut und Elevation ausrichtbare Wurfeinrichtung umfasst, die derart eingerichtet ist, dass damit die Mehrzahl von Drohnen für ihren Flugeinsatz in die Luft gebracht, insbesondere in die Luft geschossen werden können. Dies kann insbesondere durch Zündung einer Antriebsquelle, beispielsweise in Form von Munition, geschehen. Die Wurfeinrichtung kann also in Form eines Mörsers oder in Form einer Raketenabschusseinrichtung ausgebildet sein. Der Begriff der "Wurfeinrichtung" ist also im weitesten Sinne zu verstehen. Die Wurfeinrichtung kann insbesondere eine Abfeuerplattform als Träger der in die Luft zu bringenden Drohnen, eine Elevation-Antriebseinrichtung, eine Azimut-Antriebseinrichtung, eine Abfeuereinrichtung, um die Drohnen durch Zündung einer Munition in die Luft zu bringen, eine gemeinsame Basisplattform zur Aufnahme der Antriebe und/oder eine Dämpfungseinrichtung an der Basisplattform zur Dämpfung oder Reduzierung der Einwirkung von Bewegungen bei dem zu schützenden Objekt aufweisen.

Des Weiteren erweist es sich als vorteilhaft, wenn bei dem Schutzsystem eine Einrichtung zur Ermittlung von Daten über den Bewegungszustand des zu schützenden Objekts vorgesehen ist. Hierzu gehören beispielsweise die Geschwindigkeit und die Richtung der Fortbewegung des zu schützenden Objekts, sowie auch die relative Ausrichtung zur Annäherungsrichtung eines sich nähernden feindlichen Flugkörpers. Diese Einrichtung und insbesondere auch die oben genannte Einrichtung zur Ermittlung von Flugkörperdaten, insbesondere zur Ermittlung der Empfangsrichtung des empfangenen Radarsignals des Flugkörpers, sind vorzugsweise zumindest auch bei dem zu schützenden Objekt vorgesehen und bilden einen Teil des hier beanspruchten Schutzsystems. Dieses Schutzsystem kann weiter eine Recheneinheit und Datenspeichereinheit umfassen, beispielsweise in Form eines Zentralrechners, wo auch das sogenannte "Ship-data file" abgelegt ist. Darin können Inhalte hinterlegt sein, die im Verteidigungs- oder Angriffsfall ausgelesen werden und ein zur Verteidigung angewandtes Konzept, insbesondere in Form eines Täuschungsmusters, umfassen können, welches ausgewählt oder auch errechnet werden kann, und beispielsweise an die Wurfeinrichtung und gegebenenfalls auch an die Flugantriebssteuereinrichtungen der Drohnen weitergegeben werden können. Es ist aber auch denkbar, dass Täuschungsmusterdaten bei den Drohnen und deren Flugantriebssteuereinrichtungen bereits fest einprogrammiert sind. Beispielsweise könnte die jeweilige Position einer jeden Drohne im Schwarm bereits fest vorgegeben sein.

Weiter erweist es sich als vorteilhaft, wenn wiederum vorzugsweise bei dem zu schützenden Objekt eine Einrichtung zur Auswahl oder Berechnung eines Täuschungsmusters in Abhängigkeit von der Ermittlung von Flugkörperdaten und/oder von Daten über den Bewegungszustand des zu schützenden Objekts vorgesehen ist, insbesondere in Abhängigkeit des ermittelten Typs des Flugkörpers, in Abhängigkeit einer Annäherungsrichtung des Flugkörpers und/oder in Abhängigkeit der relativen Ausrichtung des zu schützenden Objekts zur Annäherungsrichtung des Flugkörpers . Im einfachsten Fall wäre es denkbar, dass in einer Speichereinrichtung einer Recheneinheit des zu schützenden Objekts ein der echten Radarsignatur des Schiffes entsprechendes Täuschungsmuster abgelegt ist, welches die relativen Positionen der mehreren Drohnen innerhalb des Drohnenschwarms wiedergibt, also eine Art dreidimensionale Täuschkörperstruktur bezeichnet. Sobald eine Annäherung eines feindlichen radargelenkten Flugkörpers festgestellt wird und eine Anflugrichtung des Flugkörpers ermittelt worden ist, ließe sich in Abhängigkeit davon eine optimale Anordnung und Ausrichtung des Täuschungsmusters, also des Drohnenschwarms als dreidimensionale Täuschkörperstruktur, relativ zu dem zu schützenden Objekt und dem anfliegenden Flugkörper festlegen und durch geeignete Ansteuerung der Wurfeinrichtung für die Drohnen umsetzen. Einmal in die Luft gebracht ordnen sich die Drohnen dann entsprechend ihrer Soll-Position im Schwarm gegenüber zumindest den benachbarten Drohnen an**.**

Wie bereits erwähnt, erweist es sich als vorteilhaft, dass bei einer Drohne eine Einrichtung zur Ermittlung einer Empfangsrichtung eines Radarsignals und/oder einer Anflugrichtung des radargelenkten Flugkörpers vorgesehen ist, insbesondere durch eine Mehrzahl von Empfangsantennen, insbesondere in Form einer array-artigen Anordnung von Empfangsantennen, insbesondere in Form eines van-Atta-Arrays von Empfangsantennen. Vorzugsweise sind alle Drohnen in dieser Weise ausgebildet.

Weiter erweist es sich im Hinblick auf die Realisierung des Täuschungsmusters als vorteilhaft, dass bei einer jeweiligen Drohne eine Einrichtung zum Bestimmen ihrer momentanen Ist-Position, insbesondere relativ zu ihrer Ausgangs-Position, und zum Vergleichen mit ihrer Soll-Position entsprechend dem zu bildenden Täuschungsmuster vorgesehen ist.

Dabei erweist es sich als vorteilhaft, wenn die Einrichtung zum Bestimmen der Ist-Position GPS basiert oder basierend auf Beschleunigungssensorik ausgebildet ist, wie oben erläutert.

Weiter erweist es sich als vorteilhaft, dass die Drohnen über Abstandsmesseinrichtungen verfügen, um einen Ist-Abstand zu wenigstens einer benachbart fliegenden Drohne ermitteln zu können, und dass die Flugantriebsteuereinrichtungen der Drohnen ausgebildet sind, um in Abhängigkeit von diesem Ist-Abstand die Flugantriebseinrichtung so anzusteuern, dass ein vorgegebener Soll-Abstand erreicht wird.

Weitere Merkmale, Einzelheiten und Vorteile der Erfindung ergeben sich aus den beigefügten Patentansprüchen und der zeichnerischen Darstellung und nachfolgenden Beschreibung einer bevorzugten Ausführungsform der Erfindung.

In der Zeichnung zeigt:
- Figur 1: eine schematische nicht maßstabsgetreue Darstellung einer Bedrohungssituation durch Anflug eines radargelenkten Flugkörpers auf ein Objekt in Form eines Schiffs;
- Figur 2: eine schematische Darstellung der Ausbringung eines Scheinziels im unmittelbaren Anschluss an eine Erkennung der Bedrohungssituation gemäß Figur 1;
- Figur 3: die schematische Andeutung der Positionierung oder Anordnung von Drohnen mit aktiven Offboard Reflektoren als Einzelstreuzentren zur Simulierung des zu schützenden Objekts, das ebenfalls dargestellt ist;
- Figur 4: das zu schützende Objekt und in räumlichem Abstand hiervon die räumliche Anordnung von Drohnen mit aktiven Offboard Reflektoren in einem Drohnenschwarm zur Bildung eines Scheinziels;
- Figur 5: eine schematische Darstellung eines aktiven Offboard Reflektors und weiterer Komponenten einer jeweiligen Drohne; und
- Figur 6: eine schematische Darstellung von Komponenten eines Schutzsystems an Bord des zu schützenden Objekts.

Anhand der Figuren wird ein erfindungsgemäßes Verfahren zum Schutz eines Objekts vor einem radargelenkten Flugkörper und ein hierfür verwandtes erfindungsgemäßes Schutzsystem erläutert.

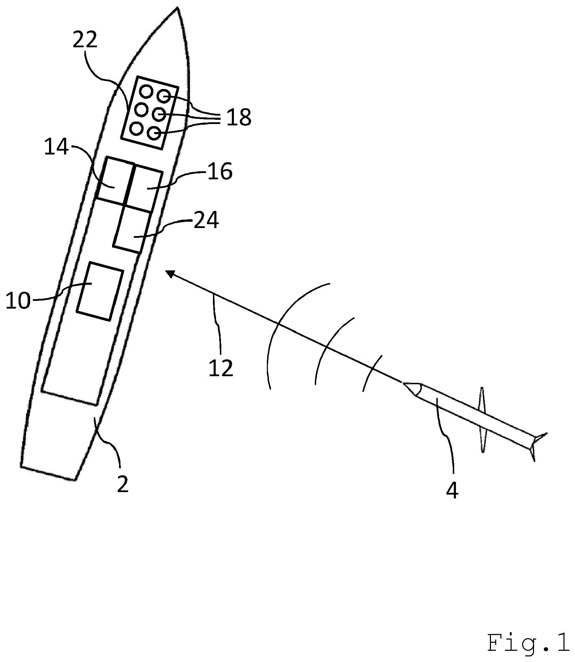

Figur 1 deutet eine Bedrohungssituation an, bei der ein zu schützendes Objekt 2 in Form eines seegehenden Schiffs sich im Einflussbereich eines anfliegenden radargelenkten Flugkörpers 4 befindet. Der Flugkörper 4 sendet ein Radarsignal in Form einer breiten Radarkeule in der ungefähren Richtung des zu treffenden Echtziels aus. Er ist dazu ausgebildet, ein von einem Echtziel reflektiertes Radarsignal zu empfangen und anhand dessen eine radargelenkte Zielführung zu der Quelle der Reflexion durchzuführen und so zu dem Echtziel zu gelangen.

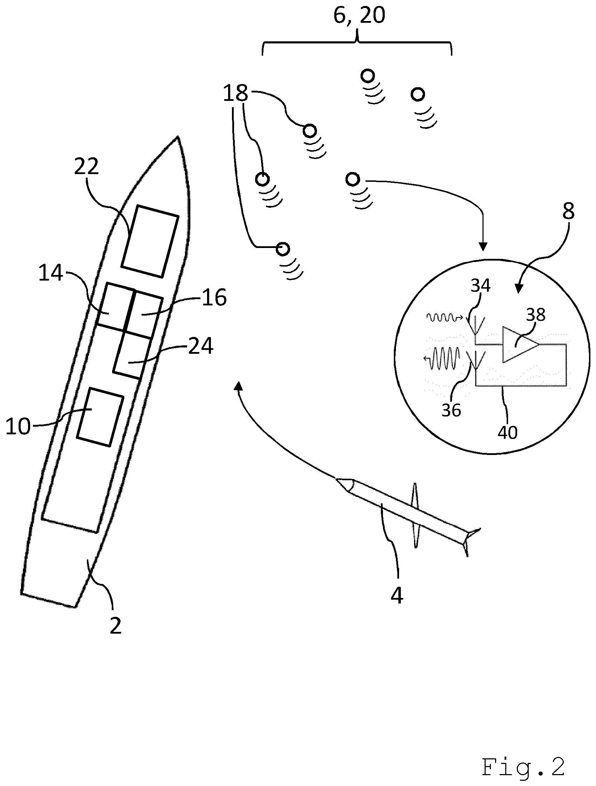

Sofern bei dem zu schützenden Objekt 2 diese Bedrohungssituation als solche erkannt wurde, kann wie schematisch in Figur 2 angedeutet, ein noch näher zu erläuterndes Scheinziel 6 ausgebracht werden, welches mittels bei dem Scheinziel 6 vorgesehenen aktiven Offboard Reflektoren 8 das von dem Flugkörper 4 ausgesandte Radarsignal empfangen, verstärken und zu dem Flugkörper 4 zurücksenden kann, damit der Flugkörper 4 sich nicht auf das zu schützende Objekt 2 aufschaltet, sondern seine Zielflugsteuerung oder -lenkung in Richtung auf das Scheinziel 6 ausführt.

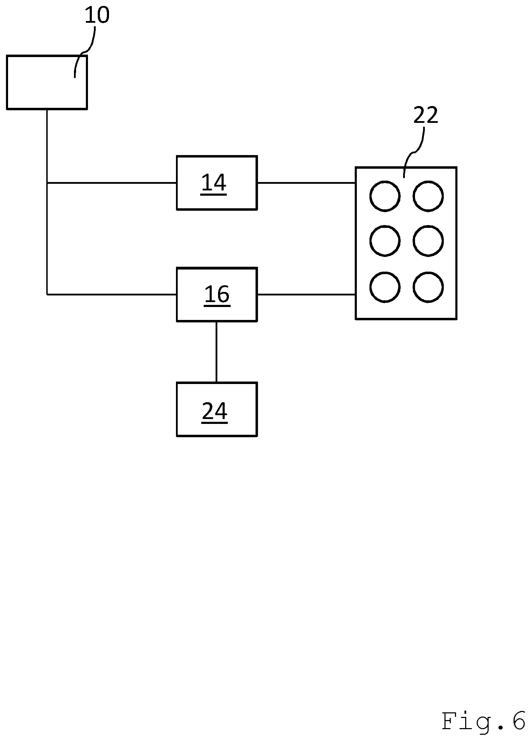

Zur Erkennung der Bedrohungssituation ist bei dem zu schützenden Objekt 2 eine Einrichtung 10 zur Erkennung eines anfliegenden Flugkörpers und zur Ermittlung von Flugkörperdaten, insbesondere zur Ermittlung einer Empfangsrichtung 12 des von dem Flugkörper 4 ausgesandten Radarsignals vorgesehen. Wenn die Bedrohungslage als solche erkannt wurde und vorzugsweise auch hinreichende Flugkörperdaten ermittelt werden konnten, wird unter Zugriff auf einen Zentralrechner 14 des Objekts 2 und/oder auf eine Einrichtung oder Recheneinheit 16 des Schutzsystems eine für diese Situation passende Abwehr- oder Schutzstrategie ausgewählt und unverzüglich umgesetzt. Der Zentralrechner 14 oder diese Einrichtung 16 ist zur Auswahl oder Berechnung einer Schutzstrategie und eines Täuschungsmusters und zu dessen Umsetzung ausgebildet. Hierfür wird nach der Erfindung eine Mehrzahl von Drohnen 18 in die Luft gebracht, derart, dass die Drohnen 18 entsprechend eines ausgewählten oder errechneten Täuschungsmusters relativ zueinander angeordnet und in eine Entfernung zu dem zu schützenden Objekt 2 gebracht werden, so dass sie entsprechend dem ausgewählten oder vorbestimmten Täuschungsmuster einen Drohnenschwarm 20 bilden, der schematisch in Figur 2 angedeutet ist. Hierfür werden die Drohnen 18 mittels einer lediglich angedeuteten in Azimut und Elevation ausrichtbaren Wurfeinrichtung 22 an Bord des zu schützenden Objekts 2 abgeschossen, um in zunehmender Entfernung von dem zu schützenden Objekt 2 den Drohnenschwarm 20 zu bilden. Die Wurfeinrichtung 22 ist dabei elektronisch gesteuert und erhält ihre Steuerbefehle vorzugsweise von der vorerwähnten Recheneinheit 16 bei dem zu schützenden Objekt 2 bzw. dem Schutzsystem. Hierbei können in der Recheneinheit 16 auch weitere Parameter aus einer Einrichtung 24 zur Ermittlung oder Bereitstellung von Daten, insbesondere über den Bewegungszustand des zu schützenden Objekts 2, über Wind- oder Seegangsverhältnisse, berücksichtigt werden. Dies ist in Figur 6 angedeutet. Die Wurfeinrichtung 22 wird dahingehend angesteuert, dass die Drohnen 18 schnellstmöglich zur Bildung des Scheinziels 6 an die intendierte Position im Raum und innerhalb des Drohnenschwarms 14 gelangen.

Unter dem Begriff einer Drohne 18 wird vorliegend ein unbemanntes, selbständig fliegendes Luftfahrzeug, beispielhaft in Form eines Flugkörpers mit Helikopterantrieb, insbesondere Hexakopterantrieb, verstanden, also mit einer Flugantriebseinrichtung 30 und mit einer damit zusammenwirkenden elektronischen programmierbaren Steuereinrichtung 32. Die Drohnen 18 und deren Flugantriebseinrichtungen 30 und Steuereinrichtungen 32 sind eingerichtet und ausgebildet, um die Drohnen 18 im dreidimensionalen Raum und relativ zueinander nach einem dem zu schützenden Objekt 2 entsprechenden Täuschungsmuster anzuordnen. Die Anordnung der Drohnen 18 im Drohnenschwarm 20 bildet also das erwähnte Täuschungsmuster, wodurch das Scheinziel 6 gebildet wird.

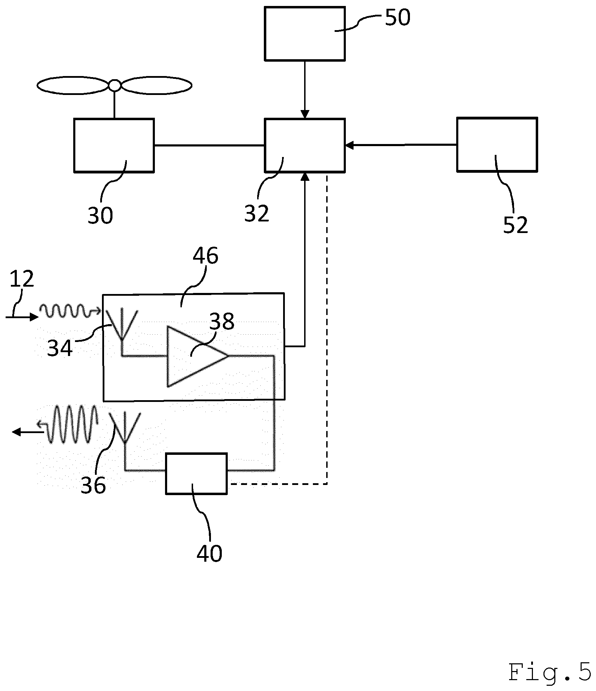

Jede Drohne 18 verfügt über einen Aktiven Offboard Reflektor 8, dessen Komponenten in Figur 2 und in Figur 5 schematisch angedeutet sind. Er umfasst jeweils wenigstens eine schematisch angedeutete Empfangsantenne 34 und wenigstens eine Sendeantenne 36 sowie eine dazwischengeschaltete Einrichtung 38 zum Verstärken des empfangenen Radarsignals und eine Einrichtung 40 zum Ansteuern der Sendeantenne 36 zum Aussenden des verstärkten Radarsignals in umgekehrter Empfangsrichtung 12 zurück zu dem anfliegenden Flugkörper 4.

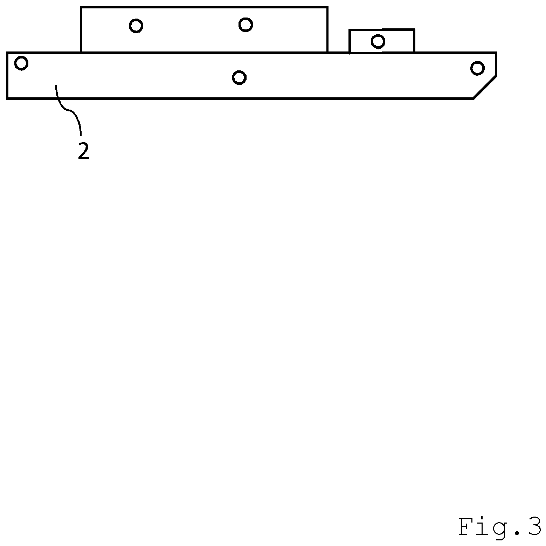

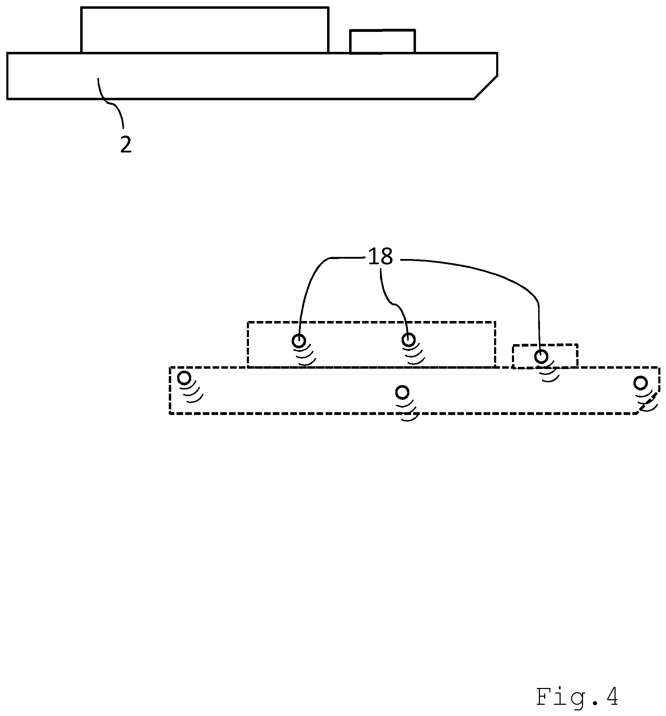

Die Figuren 3 und 4 verdeutlichen die Auswahl eines geeigneten Täuschungsmusters in Form einer Täuschkörperstruktur oder Täuschkörperanordnung der das Scheinziel 6 bildenden Drohnen 18 in Form deren Anordnung relativ zueinander im Drohnenschwarm 20. In Figur 3 ist schematisch ein zu schützendes Objekt 2 in Form eines Schiffs dargestellt. Jedes dreidimensional ausladende Objekt verfügt nicht über ein einziges Streuzentrum, sondern sein Radarstreumuster, häufig auch als Radarsignatur bezeichnet, wird von verschiedenen Bereichen des Objekts je nach deren Eignung ein starkes Radarecho in entgegengesetzter Empfangsrichtung aussenden. Beispielsweise tragen in der Seefahrt weiter von der Wasseroberfläche entfernte Bereiche eines Schiffs, wie z.B. ein Brückenaufbau oder der Schornstein, stärker zu dem Radarecho bei als nahe an der Wasseroberfläche gelegene Bereiche. Des Weiteren tragen schräg geneigte flächenhafte Bereiche auch in geringerem Maße bei als ideal rechtwinklige verschachtelte Strukturen, welche die Reflexion einfallender Radarstrahlung in die umgekehrte Einfallsrichtung begünstigen. Es besteht daher die Möglichkeit, eine Mehrzahl von Drohnen mit deren Aktiven Offboard Reflektoren 8 entsprechend der räumlichen Ausladung und des anzunehmenden Beitrags wesentlicher Streuzentren des zu schützenden Objekts 2 anzuordnen. Dort wo bei dem zu schützenden Objekt ein starkes Radarecho naturgemäß zu erwarten ist, wird daher bei dem Scheinziel 6 in Form des Drohnenschwarms 14 eine aktiv reflektierende Drohne 18 angeordnet. Beispielsweise können in Bereichen höchsten Reflexionsbeitrags, wie etwa der Brückenbereich oder Schornstein, mehrere Drohnen in geringerem Abstand voneinander, also in einer höhere Drohnendichte, entsprechend dem ausgewählten Täuschungsmuster angeordnet werden, als in wassernahen Bereichen am Bug oder Heck des Schiffs. Die Figuren 3 und 4 sollen indessen lediglich rein schematisch die Anordnung von Drohnen 18 entsprechend der spezifischen Eigenart des zu schützenden Objekts 2 verdeutlichen. Auf diese erfindungsgemäße Weise wird ein reflektiertes und zu dem aussendenden feindlichen Flugkörper 4 zurückgesandtes Radarsignal eine große Übereinstimmung zu einem tatsächlich erwarteten Radarstreumuster eines intendierten Echtziels, etwa in Form eines Schiffs, aufweisen. Die Unterscheidung zwischen Scheinziel und Echtziel wird dadurch erfindungsgemäß weiter erschwert.

Schließlich verdeutlicht Figur 5, wie schon erwähnt, schematisch die Komponenten einer jeweiligen Drohne 18. Eine Anordnung mehrerer Empfangsantennen 34 in einer Array-Form, insbesondere in Form eines van-Atta-Arrays einer Drohne 18, kann Teil einer Einrichtung 46 zur Ermittlung der Empfangsrichtung 12 des von dem Flugkörper ausgesandten und empfangenen Radarsignals bilden. Diese Richtungsinformation wird der Flugantriebsteuereinrichtung 32 der Drohnen 18 zur Verfügung gestellt, und es werden mittels der Flugantriebsteuereinrichtung 32 Steuerbefehle an die Flugantriebseinrichtung 30 gegeben, um die Drohne 18 und deren aktiven Offboard Reflektor 8 bzw. dessen Sendeantenne 36 zur bestmöglichen Empfangs- und Rückreflexion in entgegengesetzter Empfangsrichtung auszurichten.

Des Weiteren umfasst eine jeweilige Drohne 18 eine Einrichtung 50 zum Bestimmen ihrer momentanen Ist-Position. Diese in Figur 5 schematisch angedeutete Einrichtung 50 kann GPS-basiert sein oder sie kann basierend auf einer Beschleunigungssensorik mit in der Regel mehreren Beschleunigungs- und/oder Drehratensensoren ausgebildet sein, wobei letzteres bevorzugt wird. Die Flugantriebssteuereinrichtung 32 vermag dann durch Soll-/Ist-Vergleich festzustellen, ob sich die Drohne 18 an ihrer Soll-Position innerhalb des Drohnenschwarms 20 befindet. Sollte dies nicht der Fall sein, so kann ein Lageregelungsverfahren durch Ausgabe entsprechender Steuerbefehle an die Flugantriebseinrichtung 30 ausgeführt werden.

Des Weiteren ist in Figur 5 eine Abstandsmesseinrichtung 52 angedeutet, über welche Abstandsinformationen bevorzugt zu benachbart fliegenden Drohnen ermittelt und an die Flugantriebssteuereinrichtung 32 gegeben werden können.

Insgesamt kann durch die erfindungsgemäß bessere Simulation eines zu schützenden Objekts 2 bei dem Scheinziel 6 durch mehrere in einem Drohnenschwarm 20 mitgeführte Aktive Offboard Reflektoren 8 ein wirksamerer Schutz des Objekts 2 vor einem anfliegenden radargelenkten Flugkörper realisiert werden.

## Patentansprüche

1. Verfahren zum Schutz eines Objekts (2), insbesondere eines Land- oder Wasserfahrzeugs, insbesondere eines Schiffs, vor einem radargelenkten Flugkörper (4), unter Einsatz und Verwendung eines Aktiven Offboard Reflektors (8), der bei einem Scheinziel (6) angeordnet ist und wenigstens eine Empfangsantenne (34) und wenigstens eine Sendeantenne (36) umfasst, wobei ein von dem radargelenkten Flugkörper (4) ausgesandtes Radarsignal erfasst wird und als verstärktes Signal in die zuvor ermittelte umgekehrte Empfangsrichtung (12) zu dem Flugkörper (4) zurückgesandt wird,
**dadurch gekennzeichnet,**
**dass** zur Ausführung des Verfahrens eine Mehrzahl von fliegenden Drohnen (18) mit jeweils wenigstens einem besagten Aktiven Offboard Reflektor (8) zum Einsatz gelangt und dass die Drohnen (18) dabei relativ zueinander derart im Raum positioniert werden, dass deren Aktive Offboard Reflektoren (8) als Einzelstreuzentren wirken und deren zu dem Flugkörper (4) zurückgesandte Signale in ihrer Gesamtheit ein das zu schützende Objekt (2) simulierendes Radarstreumuster erzeugen,
**dass** die Drohnen (18) für ihren Flugeinsatz ausgehend von dem zu schützenden Objekt (2) oder ausgehend von einem die Drohnen mitführenden Begleitfahrzeug entsprechend eines zuvor berechneten Täuschungsmusters mittels einer elektronisch gesteuerten Wurfeinrichtung (22) für ihren Flugeinsatz in die Luft gebracht werden, derart, dass die Richtung, Geschwindigkeit und/oder Entfernung der Verbringung relativ zu dem zu schützenden Objekt (2) unter Berücksichtigung und in Abhängigkeit einer zuvor ermittelten Anflugrichtung und insbesondere weiterer Parameter des anfliegenden radargelenkten Flugkörpers (4) ermittelt werden und dass bei einer jeweiligen Drohne (18) deren momentane Ist-Position relativ zu ihrer Ausgangsposition bei dem zu schützenden Objekt (2) oder bei dem Begleitfahrzeug ermittelt wird und mit einer zuvor errechneten Soll-Position verglichen wird und dass mittels einer elektronischen Flugantriebssteuereinrichtung (32) eine jeweilige Flugantriebseinrichtung (30) der Drohne (18) derart angesteuert wird, dass die Drohne die zuvor errechnete Soll-Position einnimmt, und
**dass** eine Abstandssteuerung zwischen den Drohnen (18) ausgeführt wird, und dass die Drohnen (18) hierzu kommunizieren, also birektional Informationen austauschen.

2. Verfahren nach Anspruch 1, **dadurch gekennzeichnet, dass** mittels der Empfangsantennen (34) und/oder mittels eines zusätzlichen Sensors die Empfangsrichtung (12) des Radarsignals und damit eine Anflugrichtung des radargelenkten Flugkörpers (4) ermittelt wird.

3. Verfahren nach Anspruch 1 oder 2, **dadurch gekennzeichnet, dass** eine Empfangsrichtung (12) eines Radarsignals und/oder eine Anflugrichtung des radargelenkten Flugkörpers (4), ermittelt wird, indem bei einer Drohne (18) eine Mehrzahl von Empfangsantennen (34) vorgesehen und verwendet werden, insbesondere in Form einer arrayartigen Anordnung von Empfangsantennen, insbesondere in Form eines van-Atta-Arrays von Empfangsantennen, insbesondere mittels Phasenvergleich einer bei mehreren Empfangsantennen (34) empfangenen Radarwelle.

4. Verfahren nach Anspruch 1, 2 oder 3, **dadurch gekennzeichnet, dass** bei einer jeweiligen Drohne (18) deren momentane Ist-Position absolut und/oder relativ zu ihrer Ausgangs-Position mittels GPS oder vorzugsweise mittels Beschleunigungssensorik ermittelt wird.

5. Verfahren nach einem oder mehreren der vorstehenden Ansprüche, **dadurch gekennzeichnet, dass** die Mehrzahl von Drohnen (18) entsprechend einer zuvor vorgegebenen oder berechneten Schwarmgeschwindigkeit bewegt werden.

6. Schutzsystem eingerichtet zur Durchführung des Verfahrens nach einem oder mehreren der vorstehenden Ansprüche, umfassend
ein Scheinziel (6) und wenigstens einen Aktiven Offboard Reflektor (8), der bei dem Scheinziel angeordnet ist und wenigstens eine Empfangsantenne (34) und wenigstens eine Sendeantenne (36) sowie eine Einrichtung (38) eingerichtet zum Verstärken eines von dem radargelenkten Flugkörper (4) ausgesandten und durch die Empfangsantenne (34) empfangenen Radarsignals und eine Einrichtung (40) eingerichtet zum Ansteuern der Sendeantenne (38) zum Aussenden des verstärkten Radarsignals in umgekehrter Empfangsrichtung (12) zurück zu dem anfliegenden Flugkörper (4) aufweist,
eine Einrichtung (10) eingerichtet zur Ermittlung von Flugkörperdaten, insbesondere zur Ermittlung der Empfangsrichtung (12) des empfangenen von dem Flugkörper (4) zuvor ausgesandten Radarsignals, **dadurch gekennzeichnet,**
**dass** das Schutzsystem weiter eine Mehrzahl von Drohnen (18) umfasst, welche zusammen das Scheinziel (6) bilden, wobei alle Drohnen (18) jeweils wenigstens einen besagten Aktiven Offboard Reflektor (8) aufweisen,
**dass** die Drohnen (18) Flugantriebseinrichtungen (30) und mit diesen zusammenwirkende elektronische programmierbare Steuereinrichtungen (32) aufweisen, die eingerichtet sind, um die Drohnen (18) im dreidimensionalen Raum und relativ zueinander nach einem dem zu schützenden Objekt (2) entsprechenden, vorgegebenen oder zuvor berechneten Täuschungsmuster anzuordnen, damit die Drohnen (18) und deren Aktive Offboard Reflektoren (8) als Einzelstreuzentren wirken und in ihrer Gesamtheit ein das zu schützende Objekt (2) simulierendes Radarstreumuster erzeugen, und weiter **gekennzeichnet durch** eine elektronisch gesteuerte, in Azimut und Elevation ausrichtbare Wurfeinrichtung (22), mittels derer die Mehrzahl von Drohnen (18) für ihren Flugeinsatz in die Luft gebracht werden,
und dass bei einer jeweiligen Drohne (18) eine Einrichtung (46) eingerichtet zur Ermittlung einer Empfangsrichtung (12) eines Radarsignals und/oder einer Anflugrichtung des radargelenkten Flugkörpers (4) vorgesehen ist,
und dass bei einer jeweiligen Drohne (18) eine Einrichtung (50) eingerichtet zum Bestimmen ihrer momentanen Ist-Position und zum Vergleichen mit ihrer Soll-Position entsprechend dem zu bildenden Täuschungsmuster vorgesehen ist, und
dass die Drohnen über Abstandsmesseinrichtungen (52) verfügen, um einen Ist-Abstand zu wenigstens einer benachbart fliegenden Drohne ermitteln zu können, und dass die Flugantriebsteuereinrichtungen (32) der Drohnen (18) ausgebildet sind, um in Abhängigkeit von diesem Ist-Abstand die Flugantriebseinrichtung (30) so anzusteuern, dass ein vorgegebener Soll-Abstand erreicht wird.

7. Schutzsystem nach Anspruch 6, **dadurch gekennzeichnet, dass** eine Einrichtung (24) zur Ermittlung von Daten über den Bewegungszustand des zu schützenden Objekts vorgesehen ist.

8. Schutzsystem nach Anspruch 6 oder 7, **dadurch gekennzeichnet, dass** eine Einrichtung (16) zur Auswahl oder Berechnung eines Täuschungsmusters in Abhängigkeit von der Ermittlung von Flugkörperdaten und/oder von Daten über den Bewegungszustand des zu schützenden Objekts vorgesehen ist, insbesondere in Abhängigkeit des ermittelten Typs des Flugkörpers (4), in Abhängigkeit einer Annäherungsrichtung des Flugkörpers und/oder in Abhängigkeit der relativen Ausrichtung des zu schützenden Objekts (2) zur Annäherungsrichtung des Flugkörpers (4).

9. Schutzsystem nach einem oder mehreren der Ansprüche 6-8, **dadurch gekennzeichnet, dass** die Einrichtung (46) zur Ermittlung einer Empfangsrichtung (12) eines Radarsignals und/oder einer Anflugrichtung des radargelenkten Flugkörpers (4) durch eine Mehrzahl von Empfangsantennen (34), insbesondere in Form einer array- artigen Anordnung von Empfangsantennen (34), insbesondere in Form eines van-Atta-Arrays von Empfangsantennen, vorgesehen ist.

10. Schutzsystem nach einem oder mehreren der Ansprüche 7-9, **dadurch gekennzeichnet, dass** die Einrichtung (50) zum Bestimmen der Ist-Position GPS basiert oder basierend auf Beschleunigungssensorik ausgebildet ist.

## Claims

1. Method for protecting an object (2), in particular a land or water vehicle, in particular a ship, from a radar-guided missile (4), using an active offboard reflector (8) arranged at a decoy target (6) and comprising at least one receiving antenna (34) and at least one transmitting antenna (36), with a radar signal emitted by the radar-guided missile (4) being detected and sent back to the missile (4) as an amplified signal in the previously determined opposite receiving direction (12),
**characterized in that**
for the execution of the method, a plurality of flying drones (18), each having at least one said active offboard reflector (8), is used, and **in that** the drones (18) are positioned relative to one another in space such that their active offboard reflectors (8) act as individual scattering centers and the signals sent back to the missile (4) collectively generate a radar scattering pattern which simulates the object (2) to be protected, **in that** the drones (18) are launched for their flight operation from the object (2) to be protected or from an escort vehicle carrying the drones according to a previously calculated decoy pattern by means of an electronically controlled launching device (22), such that the direction, speed and/or distance of the deployment relative to the object (2) to be protected are determined taking into account and depending on a previously determined flight direction and, in particular, other parameters of the approaching radar-guided missile (4), and **in that** the current actual position of each drone (18) relative to its starting position at the object to be protected (2) or at the escort vehicle is determined and is compared with a previously calculated target position, and **in that** by means of an electronic flight propulsion control device (32), each flight propulsion device (30) of the drone (18) is controlled in such a way that the drone assumes the previously calculated target position, and **in that** distance control between the drones (18) is carried out, and **in that** the drones (18) communicate for this purpose, i.e. exchange information bidirectionally.

2. Method according to claim 1, **characterized in that** the receiving direction (12) of the radar signal and thus a flight direction of the radar-guided missile (4) is determined by means of the receiving antennas (34) and/or by means of an additional sensor.

3. Method according to claim 1 or 2, **characterized in that** a receiving direction (12) of a radar signal and/or a flight direction of the radar-guided missile (4) is determined by providing and using a plurality of receiving antennas (34) on a drone (18), in particular in the form of an array-like arrangement of receiving antennas, in particular in the form of a van Atta array of receiving antennas, in particular by comparing the phases of a radar wave received by a plurality of receiving antennas (34).

4. Method according to claim 1, 2 or 3, **characterized in that** the current actual position of each drone (18) is determined absolutely and/or relative to its starting position by means of GPS or preferably by means of an acceleration sensor system.

5. Method according to one or more of the preceding claims, **characterized in that** the plurality of drones (18) is moved according to a previously specified or calculated swarm speed.

6. Protection system designed to carry out the method according to one or more of the preceding claims, comprising
a decoy target (6) and at least one active offboard reflector (8) arranged at the decoy target and comprising at least one receiving antenna (34) and at least one transmitting antenna (36), as well as a device (38) designed to amplify a radar signal emitted by the radar-guided missile (4) and received by the receiving antenna (34) and a device (40) designed to control the transmitting antenna (38) to emit the amplified radar signal in the opposite receiving direction (12) back to the approaching missile (4),
a device (10) designed to determine missile data, in particular to determine the receiving direction (12) of the radar signal previously emitted by and received from the missile (4),
**characterized in that**
the protection system further comprises a plurality of drones (18) which together form the decoy target (6), all the drones (18) each having at least one said active offboard reflector (8),
**in that** the drones (18) have flight propulsion devices (30) and interacting electronic programmable control devices (32) which are designed to arrange the drones (18) in three-dimensional space and relative to one another according to a specified or previously calculated decoy pattern corresponding to the object (2) to be protected so that the drones (18) and their active offboard reflectors (8) act as individual scattering centers and collectively generate a radar scattering pattern which simulates the object (2) to be protected, and further **characterized by** an electronically controlled launching device (22) which can be aligned in azimuth and elevation and by means of which the plurality of drones (18) are launched for their flight operation,
and **in that** each drone (18) is equipped with a device (46) for determining a receiving direction (12) of a radar signal and/or a flight direction of the radar-guided missile (4),
and **in that** each drone (18) is equipped with a device (50) for ascertaining its current actual position and for comparing it with its target position according to the decoy pattern to be formed, and
**in that** the drones have distance measuring devices (52) to be able to determine an actual distance from at least one neighboring flying drone,
and **in that** the flight propulsion control devices (32) of the drones (18) are designed to control the flight propulsion device (30) on the basis of this actual distance so that a specified target distance is achieved.

7. Protection system according to claim 6, **characterized in that** a device (24) is provided for determining data regarding the movement state of the object to be protected.

8. Protection system according to claim 6 or 7, **characterized in that** a device (16) is provided for selecting or calculating a decoy pattern on the basis of the determination of missile data and/or data regarding the movement state of the object to be protected, in particular on the basis of the determined type of missile (4), on the basis of an approach direction of the missile and/or on the basis of the relative orientation of the object to be protected (2) to the approach direction of the missile (4).

9. Protection system according to one or more of claims 6-8, **characterized in that** the device (46) is provided for determining a receiving direction (12) of a radar signal and/or a flight direction of the radar-guided missile (4) by means of a plurality of receiving antennas (34), in particular in the form of an array-like arrangement of receiving antennas (34), in particular in the form of a van Atta array of receiving antennas.

10. Protection system according to one or more of claims 7-9, **characterized in that** the device (50) for determining the actual position is GPS-based or based on an acceleration sensor system.

## Revendications

1. Procédé de protection d'un objet (2), en particulier d'un véhicule terrestre ou aquatique, notamment d'un navire, contre un missile guidé par radar (4), utilisant et faisant appel à un réflecteur offboard actif (8) qui est disposé sur une cible factice (6) et comprend au moins une antenne de réception (34) et au moins une antenne d'émission (36), dans lequel un signal radar émis par le missile guidé par radar (4) est capté et renvoyé sous forme de signal amplifié dans la direction inverse de réception (12) précédemment déterminée vers le missile (4), **caractérisé en ce que**, pour l'exécution du procédé, une pluralité de drones volants (18), chacun muni d'au moins ledit réflecteur offboard actif (8), est mise en œuvre et **en ce que** les drones (18) sont positionnés les uns par rapport aux autres dans l'espace de sorte que leurs réflecteurs offboard actifs (8) agissent en tant que centres de diffusion individuels et que les signaux renvoyés vers le missile (4) forment dans leur ensemble un motif de diffusion radar simulant l'objet (2) à protéger, que les drones (18) pour leur mission de vol sont mis en l'air depuis l'objet (2) à protéger ou depuis un véhicule d'accompagnement transportant les drones conformément à un modèle de leurre calculé au préalable au moyen d'un dispositif de lancement (22) commandé électroniquement, de sorte que la direction, la vitesse et/ou la distance du déplacement par rapport à l'objet (2) à protéger sont déterminées en tenant compte et en fonction d'une direction d'approche préalablement déterminée et notamment d'autres paramètres du missile guidé par radar (4) en approche, et **en ce que**, pour chaque drone (18), sa position réelle actuelle par rapport à sa position de départ auprès de l'objet (2) à protéger ou auprès du véhicule d'accompagnement est déterminée et comparée à une position de consigne calculée au préalable, et **en ce que**, au moyen d'une unité de commande électronique de propulsion (32), un dispositif de propulsion (30) respectif du drone (18) est piloté de sorte que le drone atteigne la position de consigne calculée précédemment, et qu'un contrôle des distances entre les drones (18) est exécuté, et que les drones (18) communiquent à cet effet, c'est-à-dire échangent des informations de manière bidirectionnelle.

2. Procédé selon la revendication 1, **caractérisé en ce que** la direction de réception (12) du signal radar et donc une direction d'approche du missile guidé par radar (4) sont déterminées au moyen des antennes de réception (34) et/ou au moyen d'un capteur supplémentaire.

3. Procédé selon la revendication 1 ou 2, **caractérisé en ce qu'**une direction de réception (12) d'un signal radar et/ou une direction d'approche du missile guidé par radar (4) est déterminée en prévoyant et en utilisant sur un drone (18) une pluralité d'antennes de réception (34), en particulier sous la forme d'une disposition en réseau d'antennes de réception, notamment sous la forme d'un réseau van-Atta d'antennes de réception, notamment au moyen d'une comparaison de phase d'une onde radar reçue par plusieurs antennes de réception (34).

4. Procédé selon la revendication 1, 2 ou 3, **caractérisé en ce que**, pour chaque drone (18), sa position réelle actuelle, absolue et/ou relative à sa position de départ, est déterminée au moyen du GPS ou, de préférence, au moyen de capteurs d'accélération.

5. Procédé selon une ou plusieurs des revendications précédentes, **caractérisé en ce que** la pluralité de drones (18) est déplacée selon une vitesse d'essaim prédéfinie ou calculée au préalable.

6. Système de protection conçu pour l'exécution du procédé selon une ou plusieurs des revendications précédentes, comprenant une cible factice (6) et au moins un réflecteur offboard actif (8) disposé sur la cible factice et comprenant au moins une antenne de réception (34) et au moins une antenne d'émission (36), ainsi qu'un dispositif (38) prévu pour amplifier un signal radar émis par le missile guidé par radar (4) et reçu par l'antenne de réception (34) et un dispositif (40) prévu pour commander l'antenne d'émission (38) afin d'émettre le signal radar amplifié dans la direction inverse de réception (12) vers le missile (4) en approche, un dispositif (10) prévu pour déterminer des données relatives au missile, notamment pour déterminer la direction de réception (12) du signal radar préalablement émis par le missile (4), **caractérisé en ce que** le système de protection comprend en outre une pluralité de drones (18) qui forment ensemble la cible factice (6), lesdits drones (18) comportant chacun au moins ledit réflecteur offboard actif (8)
réflecteur offboard actif (8), que les drones (18) disposent de dispositifs de propulsion (30) et d'unités de commande électronique de propulsion programmables (32) interagissant avec ceux-ci, qui sont conçus pour disposer les drones (18) dans l'espace tridimensionnel et les uns par rapport aux autres selon un modèle de leurre correspondant à l'objet (2) à protéger, prédéfini ou calculé au préalable, de sorte que les drones (18) et leurs réflecteurs offboard actifs (8) agissent en tant que centres de diffusion individuels et produisent dans leur ensemble un motif de diffusion radar simulant l'objet (2) à protéger, et **caractérisé en outre par** un dispositif de lancement (22) commandé électroniquement, orientable en azimut et en élévation, au moyen duquel la pluralité de drones (18) est mise en l'air pour leur mission de vol, et en ce que, pour chaque drone (18), un dispositif (46) destiné à déterminer une direction de réception (12) d'un signal radar et/ou une direction d'approche du missile guidé par radar (4) est prévu,
et en ce que, pour chaque drone (18), un dispositif (50) destiné à déterminer sa position réelle actuelle et à la comparer avec sa position de consigne conformément au modèle de leurre à constituer est prévu, et
que les drones disposent d'appareils de mesure de distance (52) permettant de déterminer la distance réelle vis-à-vis d'au moins un drone voisin en vol, et que les unités de commande de propulsion (32) des drones (18) sont conçues pour commander, en fonction de cette distance réelle, le dispositif de propulsion (30) de manière à atteindre une distance de consigne prédéterminée.

7. Système de protection selon la revendication 6, **caractérisé en ce qu'**un dispositif (24) destiné à déterminer des données relatives à l'état de mouvement de l'objet à protéger est prévu.

8. Système de protection selon la revendication 6 ou 7, **caractérisé en ce que** un dispositif (16) pour la sélection ou le calcul d'un modèle de leurre est prévu en fonction de la détermination de données sur le missile et/ou de données sur l'état de mouvement de l'objet à protéger, en particulier en fonction du type déterminé du missile (4), en fonction d'une direction d'approche du missile et/ou en fonction de l'orientation relative de l'objet à protéger (2) par rapport à la direction d'approche du missile (4)

9. Système de protection selon l'une quelconque des revendications 6 à 8, **caractérisé en ce que** le dispositif (46) destiné à déterminer une direction de réception (12) d'un signal radar et/ou une direction d'approche du missile guidé par radar (4) est prévue au moyen d'une pluralité d'antennes de réception (34), notamment sous la forme d'une disposition en réseau d'antennes de réception (34), en particulier sous la forme d'un réseau van-Atta d'antennes de réception.

10. Système de protection selon l'une quelconque des revendications 7 à 9, **caractérisé en ce que** le dispositif (50) destiné à déterminer la position réelle est basé sur le GPS ou est conçu sur la base de capteurs d'accélération.
